Europäisches Patentamt

European Patent Office

Office européen des brevets

(11) Veröffentlichungsnummer: **0 264 864 B1**

(12) **EUROPÄISCHE PATENTSCHRIFT**

(45) Veröffentlichungstag der Patentschrift: 04.12.91

(51) Int. Cl.⁵: **B29D 7/00**, B29C 43/24, //B29L7:00

(21) Anmeldenummer: 87115212.0

(22) Anmeldetag: 17.10.87

(54) Verfahren und Vorrichtung zur Herstellung von Platten, Bahnen, plattenähnlichen Formteilen oder Profilen aus Kunststoffen.

(30) Priorität: 24.10.86 DE 3636206

(43) Veröffentlichungstag der Anmeldung:
27.04.88 Patentblatt 88/17

(45) Bekanntmachung des Hinweises auf die Patenterteilung:
04.12.91 Patentblatt 91/49

(84) Benannte Vertragsstaaten:
AT BE CH DE ES FR GB GR IT LI LU NL SE

(56) Entgegenhaltungen:
EP-B- 0 051 730          AT-B- 318 896
DE-A- 1 629 376          DE-A- 2 346 543
DE-A- 2 801 556          DE-A- 3 027 642
DE-B- 2 732 724          US-A- 3 504 075

(73) Patentinhaber: **Kraftanlagen AG.**
**Im Breitspiel 7**
**W-6900 Heidelberg 1(DE)**

Patentinhaber: **DEUTSCHE SOLVAY-WERKE GMBH**
**Langhansstrasse 6**
**W-5650 Solingen 11(DE)**

(72) Erfinder: **Käufer, Helmut, Prof. Dr.**
**Florastrasse 64**
**W-4020 Mettmann 2(DE)**
Erfinder: **Münnich, Janos, Dipl.-Ing.**
**Potsdamer Strasse 106**
**W-1000 Berlin 30(DE)**

(74) Vertreter: **Seiler, Siegfried**
**c/o DEUTSCHE SOLVAY-WERKE GmbH Langhansstrasse 6 Postfach 11 02 70**
**W-5650 Solingen 11(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Platten, Bahnen, plattenähnlichen Formteilen oder Profilen aus Kunststoffen, vorzugsweise Thermoplasten, von hoher mechanischer Festigkeit aufgrund einer molekularen Orientierung durch Walzpressrecken innerhalb des Walzenspaltes mindestens eines Druck- oder Kompressionswalzenpaares bei Walzen-und Materialtemperaturen unterhalb des Kristallitschmelzpunktes oder der Erweichungstemperatur des Kunststoffes und oberhalb 303 K unter Druckverstreckung. Mit Hilfe dieses Verfahrens und der Vorrichtung gelingt es, die mechanischen Eigenschaften der Platten, Bahnen, plattenähnlichen Formteile oder Profile zu verbessern.

Aus der EU-B 0 051 730 ist bereits ein Verfahren zur Herstellung von Platten, Folien, Bahnen, Bändern, Profilen oder platten- bzw. folienähnlichen Formteilen von hoher mechanischer Festigkeit aus thermoplastischen Kunststoffen durch Druckverstreckung innerhalb des Walzenspaltes mehrerer Druckwalzenpaare unterhalb des Kristallitschmelzpunktes bzw. Erweichungspunktes des thermoplastischen Kunststoffes bekannt, wobei mindestens ein Kompressionswalzenpaar des zur Druckverstreckung eingesetzten Kompressionswalzenaggregates eine Linienlast von 100 N/cm - 900 N/cm, vorzugsweise 150 N/cm - 850 N/cm, auf vorgefertigte Platten, Folien, Bahnen, Bänder, Profile, platten- bzw. folienähnlichen Formteile oder auf aus dem Extruder kommende platten-, folien-, bahnen-, band- oder profilähnliche Vorformlinge im Walzenspalt des Kompressionswalzenpaares kurzzeitig ausübt und daß nach der ersten kurzzeitigen Druckverstreckung noch innerhalb der Regenerationszeit der Ermüdungserscheinung des druckbeaufschlagten Bereiches und/oder der Relaxationszeit der elastischen Rückstellung des druckbeaufschlagten Bereiches des Thermoplasten nach Ablauf eines Zeitintervalles zwischen 5 s und 5 min, vorzugsweise zwischen 20 s und 3 min, die Platten, Folien, Bahnen, Bänder, Profile, platten- bzw. folienähnliche Formteile bzw. die druckverstreckten Vorformlinge einer oder mehreren weiteren kurzzeitigen Druckverstreckungen und/oder Drucknachbehandlungen im Walzenspalt eines oder mehrerer weiterer Kompressionswalzenpaare mit einer geringeren Linienlast von 75 N/cm bis 700 N/cm, vorzugsweise 80 N/cm bis 650 N/cm, unterworfen werden, wobei die Temperatur dieser Walzen oder Walzenpaare gleich oder kleiner ist wie bzw. als die Temperatur des ersten zur Druckverstreckung eingesetzen Kompressionswalzenaggregates, der Druck in Abhängigkeit vom Walzenspalt varriert wird und der Walzenspalt vorzugsweise den gleichen Abstand aufweist wie der des zur Druckverstreckung vorgeschalteten Kompressionswalzenpaares.

Als nachteilig hat sich jedoch bei der Anwendung dieses Verfahrens herausgestellt, daß bei der Verwendung der Linienlasten von 100 N/cm bis 900 N/cm nicht bei allen Thermoplasten und bei allen innerhalb des Temperaturbereiches angegebenen Walzentemperaturen die gewünschten Eigenschaften in vollem Umfang erzielt werden und/oder häufigere oder zahlreiche Durchläufe innerhalb des Relaxationszeitraumes erforderlich werden können. Weiterhin besteht die Schwierigkeit, daß zur Erzielung der angegebenen Vorteile je nach Thermoplast und Temperatur meist nur Platten bis zu einer geringen Breite, beispielsweise ein Band bis zu 20 cm oder bis zu 25 cm, druckbehandelt werden konnten.

Ziel und Aufgabe der vorliegenden Erfindung war es die vorgenannten Nachteile zu vermeiden und ein verbessertes Verfahren und eine verbesserte Vorrichtung zu entwickeln.

Insbesondere sollten die mechanischen Eigenschaften der druckverstreckten Platten, Bahnen oder plattenähnlichen Formteile oder Profile durch Verwendung des Verfahrens und der Vorrichtung verbessert wurden. Weiterhin sollten Vorrichtungen geschaffen werden, die es ermöglichen, mit geringem Anlagen- und Fertigungsaufwand preßgereckte Platten, Bahnen, plattenähnliche Formteile und Profile mit den gewünschten Eigenschaften zu erhalten.

Erfindungsgemäß wurde festgestellt, daß diesen Zielen und Aufgaben ein Verfahren zur Herstellung von Platten, Bahnen, plattenähnlichen Formteilen oder Profilen aus Kunststoffen, vorzugsweise Thermoplasten, von hoher mechanischer Festigkeit aufgrund einer molekularen Orientierung gerecht wird, durch Walzpressrecken innerhalb des Walzenspaltes mindestens eines Druck-oder Kompressionswalzenpaares bei Walzen- und Materialtemperaturen unterhalb des Kristallitschmelzpunktes oder der Erweichungstemperatur des Kunststoffes und oberhalb 303 K unter Druckverstreckung. Gemäß der Erfindung erfolgt das Walzpreßrecken der Platten, Bahnen, plattenähnlichen Formteile oder Profile mit gleicher oder annähernd gleicher Umfangsgeschwindigkeit der Druck- oder Kompressionswalzen oder ohne Friktion bei Drücken von 50 bis 250 M Pa, vorzugsweise 90 bis 150 M Pa, bei einem Preßreckgrad (Verhältnis der Einlaufplattendicke oder Materialdicke vor dem Verpressen zur Auslaufplattendicke oder Materialdicke nach dem Verpressen) von über 2,1 (Preßreckgrad nach einer oder mehreren Preßreckung(en)).

Gemäß einer weiteren bevorzugten Ausführungsform des erfindungsgemäßen Verfahrens zur Herstellung von Platten, Bahnen, plattenähnlichen Formteilen oder Profilen aus Kunststoffen, vorzugsweise Thermoplasten, wird das Walzpreßrecken der Platten, Bahnen, plattenähnlichen Formteile oder Profile mit gleicher oder annähernd gleicher Umfangsgeschwindigkeit der Druck- oder Kompressionswalzen oder ohne Friktion durchgeführt, wobei das Walzpreßrecken bei Drücken von 20 bis 150 MPa, vorzugsweise 25 bis 145 MPa, und bei Temperaturen von über 333 K, vorzugsweise über 353 K (berechnet als Materialtemperatur) und/oder bei Mitverwendung von Zugkräften sowie bei einem Reckgrad (Verhältnis der Einlaufplattendicke oder Materialdicke vor dem Verpressen (mit oder ohne zusätzlichem Zugrecken) zur Auslaufplattendicke oder Materialdicke nach dem Verpressen (mit oder ohne zusätzlichem Zugrecken)) von über 1,1, vorzugsweise über 1,3, erfolgt.

Von dem Druck- oder Kompressionswalzenpaar wird gemäß der Erfindung über bzw. auf eine Breite der Platte, Bahn, dem plattenähnlichen Formteil oder Profil von 300 bis 3000 mm, vorzugsweise 500 bis 2500 mm, eine Walzkraft, (Summe der auf die Lager einer Druck- oder Kompressionswalze einwirkenden Kräfte), größer als 60 000 N, vorzugsweise größer als 190 000 N, ausgeübt.

Mit Hilfe des erfindungsgemäßen Walzpreßreck-Verfahrens werden Platten, Bahnen, plattenähnliche Formteile oder Profile oder entsprechende Halbzeuge aus Massenkunststoffen hochmolekularorientiert, so daß ein Verfestigungseffekt (Eigenverstärkung) im entstehenden Produkt (Fertigteil oder Halbzeug) hervorgerufen wird. Der Werkstoff wird unter Verwendung des erfindungsgemäßen Verfahrens während der Preßreckung vergütet. Dadurch gewinnen die Halbzeuge bessere Verformbarkeit, die Fertigprodukte vervielfachte, gerichtete Festigkeit, höhere Oberflächenhärte, verbesserte optische, chemische Eigenschaften und dgl.

Nach einer bevorzugten Ausführungsform des Verfahrens wird auf die Platte, Bahn, das plattenähnliche Formteil oder das Profil eine Walzkraft (Summe der auf die Lager einer Druck- oder Kompressionswalze einwirkenden Kräfte) von $2 \times 10^5$ N - $9 \times 10^6$ N, vorzugsweise $4 \times 10^5$ N - $8 \times 10^6$ N, im Walzenspalt ausgeübt, wobei die anzuwendende Walzkraft direkt von der walzenbeaufschlagten Breite der Platte, Bahn oder des plattenähnlichen Formteiles oder des Profils und dem Walzenradius und der Differenz aus Einlaufplattendicke bzw. Einlaufprofildicke und der Spalthöhe, vorzugsweise direkt von der walzenbeaufschlagten Breite der Platte, Bahn oder des plattenähnlichen Formteiles oder des Profils und der Quadratwurzel aus dem Produkt des Walzenradius und der Differenz aus Einlaufplattendicke bzw. Einlaufprofildicke und der Spaltbreite abhängig ist.

Nach einer weiteren bevorzugten Ausführungsform des erfindungsgemäßen Verfahrens wird auf die Platte, Bahn, das plattenähnliche Formteil oder das Profil eine Walzkraft (Summe der auf die Lager einer Druck-oder Kompressionswalze einwirkenden Kräfte) von $7 \times 10^4$ N - $1,\bar{9} \times 10^5$ N, vorzugsweise $1 \times 10^5$ N - $1,9 \times 10^5$ N, im Walzenspalt ausgeübt, wobei die anzuwendende Walzkraft direkt von der walzenbeaufschlagten Breite der Platte, Bahn oder des plattenähnlichen Formteiles oder des Profils und dem Walzenradius und der Differenz aus Einlaufprofildicke bzw. Einlaufprofildicke und der Spalthöhe, vorzugsweise direkt von der walzenbeaufschlagten Breite der Platte, Bahn oder des plattenähnlichen Formteiles oder des Profils und der Quadratwurzel aus dem Produkt des Walzenradius und der Differenz aus Einlaufplattendicke bzw. Einlaufprofildicke und der Spalthöhe, abhängig ist, wobei das Walzpreßrecken bei Drücken von 20 bis 150 MPa, vorzugsweise 25 bis 145 MPa, bei Temperaturen von über 333 K, vorzugsweise über 353 K (berechnet als Materialtemperatur) und/oder bei Mitverwendung von Zugkräften sowie bei einem Reckgrad (Verhältnis der Einlaufplattendicke oder Materialdicke vor dem Verpressen zur Auslaufplattendicke oder Materialdicke nach dem Verpressen mit oder ohne zusätzlichem Zugrecken) von über 1,1, vorzugsweise über 1,3, erfolgt.

Nach einer weiteren bevorzugten Ausführungsform des erfindungsgemäßen Verfahrens wird ein Preßreckgrad von 2,3 bis 10, vorzugsweise 2,5 bis 8, eingehalten. Des weiteren wird der Preßreckgrad vorzugsweise in Abhängigkeit von der Spalthöhe, dem Walzenradius und/oder der Breite der Platte, der Bahn, des plattenähnlichen Formteiles oder Profils, der Zahl und Richtung(en) der Walzpreßreckungen, der Walzen-, Materialtemperatur und/oder der Walzengeschwindigkeit eingestellt.

Die Erzielung derart hoher Preßreckgrade (Verhältnis der Einlaufplattendicke oder Materialdicke vor dem Verpressen zur Auslaufplattendicke oder Materialdicke nach dem Verpressen) unter Verwendung noch höherer Drücke war ausgehend von der EU-B 0 051 730 nicht zu erwarten und nicht naheliegend, da bei der Verwendung noch höherer Linienlasten gemäß EU-B 0 051 730 die Kompressionswalzen bzw. Kalanderwalzen nicht die noch höheren Druckbereiche aushielten, so daß dort der Weg über mehrere bzw. zahlreiche nacheinanderfolgende Druckverpressungen innerhalb der Relaxationszeiten gewählt wurde. Ausgehend von der EU-B 0 051 730 war es auch nicht naheliegend, mehrere Walzpreßreckungen unter noch stärkerem Druck durchzuführen, da es bekannt ist, daß die Thermoplasten bei zu hohen Drücken "totgewalzt" (Auftreten von Versprödungen, brüchigen Oberflächen, Strukturrissen, Sprödigkeit oder Bruch) werden können (vgl. EU-B 0 051 730 Seite 3, Zeilen 12 und 13). Demgegenüber werden gemäß der vorliegenden Erfindung viel höhere Linienlasten, nämlich Linienlasten von 950 N/mm bis 5.500 N/mm, vorzugsweise 1.200 N/mm bis 5.000 N/mm, angewendet, um die gewünschten Vorteile, Pressreckgrade und dgl. zu erzielen. Dabei müssen Kompressionswalzen und/oder Stützwalzen verwendet werden, die gegenüber den herkömmlichen verwendeten Kunststoffkalander- oder Kunststoffkompressionswalzen verbessert sind und gegenüber Durchbiegung einen höheren Widerstand aufweisen.

Gemäß dem erfindungsgemäßen Verfahren findet bei aufeinanderfolgenden Walzpreßreckungen (vorzugsweise innerhalb der Relaxationszeit) eine Temperaturkonditionierung, vorzugsweise Wärmeübertragung, auf die Platte, Bahn, das plattenähnliche Formteil oder das Profil durch mindestens eine Kompressions- und/oder Stützwalze unmittelbar oder mittelbar statt, vorzugsweise unter mindestens einer Kompressions-oder Stützwalze angeordneter Bohrungen und/oder Führungen, für Wärmeregulierungs-, vorzugsweise für Wärmeübertragungsflüssigkeiten, und/oder durch Temperierung mittels Strahlung und/oder Kontaktheizung. Nach einer bevorzugten Ausführungsform erfolgt in Vor- und/oder Nachschaltung zum Walzpressrekken eine Temperaturkonditionierung der Platte, der Bahn, des plattenähnlichen Formteiles oder des Profiles, vorzugsweise unter Verwendung einer Vorrichtung zur Vermeidung einer Wärmeabgabe an die Umgebung.

Je nach Art des Kunststoffes, des bei der Kompression angewandten Druckes von 50 bis 250 MPa bzw. 20 bis 49,$\overline{9}$ MPa, vorzugsweise 90 bis 150 MPa bzw. 25 bis 49,9 MPa, der Temperaturen und dgl. kann bereits eine Druckverstreckung durch ein Kompressionswalzenpaar unter Verwendung der erfindungsgemäßen Verfahrensbedingungen ausreichend sein, um die mechanische Verbesserung zu erhalten. Um jedoch die Rückstellung des Materials möglichst klein zu halten und die mechanischen Eigenschaften erheblich zu verbessern, wird bevorzugt, die Platte, die Bahn, das plattenähnliche Formteil oder das Profil (vorzugsweise in der Relaxationszeit oder Zeit der elastischen Rückstellung des Kunststoffes oder Thermoplasten) nach der ersten Druckverstreckung im Kompressionswalzenpaar mindestens einer weiteren Druckverstreckung durch Kompressionswalzen unterworfen (Zeitintervall der Relaxationszeit vgl. EU-B 0 051 730).

Unter Relaxationszeit oder Zeit der elastischen Rückstellung des Thermoplasten wird die Zeit verstanden, innerhalb der sich eine verminderte elastische Dämpfung der druckbeaufschlagen Stelle des aus dem Walzenspalt kommenden Thermoplasten ergibt. Die Zeit der elastischen bzw. spontanen elastischen Rückstellung (Relaxationszeit bzw. Regenerationszeit) ist u.a. von den Verarbeitungsbedingungen bzw. den Einwirkungsbedingungen (Walzpreßrecktemperatur, gewählte Linienlast usw.) und von dem jeweiligen Thermoplasten abhängig (die Relaxationszeit braucht je nach äußeren Bedingungen nicht identisch zu sein mit der Zeit der molekularen Relaxation).

Je höher die gewählte Walzpreßrecktemperatur innerhalb des erfindungsgemäßen Verfahrens ist, umso länger erstreckt sich die Regenerations- bzw. Relaxationszeit. Je fester dagegen der Thermoplast ist oder je niedriger die gewählte Walzpreßrecktemperatur liegt, umso schneller stellt sich die geringe elastische Dämpfung zurück.

Die nach dem erfindungsgemäßen Verfahren hergestellten Platten, Bahnen, plattenähnlichen Formteile oder Profile weisen verbesserte mechanische Eigenschaften, u. a. verbesserte Schlagzähigkeit und dgl. auf. Sie können unmittelbar verwendet werden oder einem nachträglichen Umformverfahren (vorzugsweise Verpressung, Verformung, Ziehen und dgl.) unterworfen werden. Erfindungsgemäß wurde festgestellt, daß die nachträglich durchgeführten Umformverfahren mindestens 3 %, vorzugsweise mehr als 6 %, unterhalb der bei dem Walzpreßrecken verwendeten Materialtemperaturen liegen sollen, damit die erzielten Orientierungen nicht verloren gehen, wobei in Sonderfällen auch die Walzpreßrecktemperaturen bei der Verformung überschritten werden können.

Die nach dem erfindungsgemäßen Verfahren hergestellten, vorzugsweise eigenverstärkten Kunststoffe können als Konstruktionswerkstoffe bevorzugt auf den Gebieten der Maschinenbau-, Flugzeug- und Kraftfahrzeugindustrie sowie Bauindustrie Verwendung finden. Diese eigenverstärkten Kunststoffteile bieten einerseits Eigenschaftsverbesserungen und ermöglichen neue Funktionen von technischen Teilen, weisen andererseits ein geringes spezifisches Gewicht auf und tragen damit bei Fahrzeugen nochmals zur Energieeinsparung bei.

Die nach dem erfindungsgemäßen Verfahren und der erfindungsgemäßen Vorrichtung walzpreßgereckten Kunststoffe weisen bessere mechanische, optische und chemische Eigenschaften, wie z.B. vervielfachte Festigkeit und Schlagzähigkeit, bessere Kältebeständigkeit, erhöhte Transparenz, höhere Oberflächenhärte und Verschleißfestigkeit, bessere Barriereeigenschaften und leichtere Verformbarkeit auf. Sie besitzen auch die Eigenschaft einer verbesserten Energieaufnahmefähigkeit, z.B. Aufnahmefähigkeit von Stoßenergie und dgl..

Mit Hilfe des erfindungsgemäßen Walzpreßreck-Verfahrens werden in, durch übliche Urformverfahren hergestellte Platten, Bahnen, plattenähnliche Formteile oder Profile aus Massenkunststoffen hohe Molekülorientierungen hineingebracht, die einen Verfestigungseffekt (Eigenverstärkung) im entstehenden Produkt (Fertigteil oder Halbzeug) hervorrufen. Der Werkstoff wird damit während der Formgebung vergütet. Dadurch gewinnen diese Halbzeuge bessere Verformbarkeit, die Fertigprodukte vervielfachte, gerichtete Festigkeit, höhere Oberflächenhärte, verbesserte optische, chemische Eigenschaften und dgl.

Es können durch diese orientierten Thermoplastteile Teile aus faserverstärkten Kunststoffen, Verbundkonstruktionen und Metallteile abgelöst werden. Solche Teile weisen nämlich gegenüber Metallen einen Preisvorteil (rohstoff- und fertigungsbedingt), ein geringeres spezifisches Gewicht und Korrosionsbeständigkeit auf, und gegenüber hochwertigen, technischen Kunststoffen oder Blends ergibt sich zusätzlich ein erheblicher Preisvorteil.

Faserverstärkte Bahnen, Platten und dgl. und andere Verbundsysteme haben den Nachteil, daß ihre einzelnen Komponenten sich nur schwer trennen lassen und die unbrauchbar gewordenen Teile bzw. sonstigen Abfälle deponiert oder der Pyrolyse zugeführt werden müssen. Sie können weitgehend durch eigenverstärkte Platten, Bahnen, plattenähnliche Formteile oder Profile nach dem erfindungsgemäßen Verfahren abgelöst werden, so daß ein umweltfreundlicher Kreislauf der Rohstoffe möglich ist, da orientierte Einstoffsysteme direkt wieder verarbeitet werden können. Durch die erhöhte Festigkeit kann bei herkömmlichen Kunststoffteilen auch mit kleineren Dimensionen (dünneren Wanddicken) konstruiert werden. Dieses führt zu Material- und Gewichtseinsparungen.

Nach einer bevorzugten Ausführungsform des Verfahrens wird die Platte, die Bahn, das plattenähnliche Formteil oder das Profil, vorzugsweise innerhalb der Relaxationszeit, nach dem ersten oder mehrfachen Walzpreßrecken in Spaltebene zur Durchlaufrichtung um einen Winkel, vorzugsweise um 90°, geschwenkt und unter Einstellung einer gleichen, vorzugsweise verringerten Spalthöhe als bei der vorausgegangenen Verpressung mindestens erneut durch ein Kompressionswalzenpaar hindurchgeleitet. Der Durchlauf durch mindestens ein Kompressionswalzenpaar nach der Schwenkung oder Drehung um einen Winkel, vorzugsweise um 90°, erfolgt vorzugsweise innerhalb der vorgenannten Relaxationszeit. Durch diese Verfahrensmaßnahme können biaxial orientierte Platten, Bahnen, plattenähnliche Formteile oder Profile erhalten werden.

Nach einer anderen vorteilhaften Ausführungsform wird die Platte, Bahn, das plattenähnliche Formteil oder das Profil, vorzugsweise innerhalb der Relaxationszeit, nach dem ersten oder mehrfachen Walzpreßrecken in Spaltenebene zur Durchlaufrichtung um 10° bis 80° geschwenkt, unter Einstellung einer gleichen, vorzugsweise verringerten Spalthöhe als bei dem vorausgegangenen Walzpreßrecken zunächst durch ein Kompressionswalzenpaar hindurchgeleitet und anschließend bezüglich der Durchlaufrichtung spiegelbildlich erneut geschwenkt unter gleicher, vorzugsweise verringerter Spalthöhe durch ein Kompressionswalzenpaar hindurchgeleitet. Durch Einstellung des Winkels der Schwenkung oder Drehung kann auch der Grad der biaxialen Orientierung mitbestimmt werden.

Nach einer anderen bevorzugten Ausführungsform wird die Platte, Bahn, das plattenähnliche Formteil oder Profil, vorzugsweise innerhalb der Relaxationszeit, nach dem ersten oder mehrfachen Walzpreßrecken in Gegenrichtung unter Einstellung einer gleichen, vorzugsweise verringerten Spalthöhe als bei der vorausgegangenen Verpressung durch ein Kompressionswalzenpaar, vorzugsweise durch das gleiche Kompressionswalzenpaar, mit reversierbarem Antrieb hindurchgeleitet. Bei dieser Ausführungsform können mehrfach hinter- oder nebeneinander angeordnete Kompressionswalzenpaare eingespart werden.

Nach einer anderen Ausführungsform des erfindungsgemäßen Verfahrens wird die Platte, die Bahn, das plattenähnliche Formteil oder das Profil durch mindestens ein in einem Winkel von 1 bis 89°, vorzugsweise 45°, zur Durchlaufrichtung derselben angeordneten ersten Kompressionswalzenpaar und nachfolgend von mindestens einem weiteren, im Winkel von 91 bis 179°, vorzugsweise 135°, zur Durchlaufrichtung angeordneten Kompressionswalzenpaar druckbeaufschlagt und walzpreßgereckt. Bei dieser Ausführungsform wird in einem Durchgang eine quasi biaxiale molekulare Orientierung erzielt. Nach, während oder vor dem Durchtritt der druckbeaufschlagten Fläche durch ein Walzenpaar oder eine oder mehrere Zugvorrichtungen, vorzugsweise durch das letzte Kompressionswalzenpaar, wird dabei vorzugsweise eine Zugkraft in Durchlaufrichtung auf die Platte, Bahn, das plattenähnliche Formteil oder Profil ausgeübt.

Die Erfindung betrifft weiterhin eine Vorrichtung zur Herstellung von Platten, Bahnen, plattenähnlichen Formteilen oder Profilen aus Kunststoffen, vorzugsweise Thermoplasten, von hoher mechanischer Festigkeit aufgrund einer Molekularorientierung durch Walzpreßrecken innerhalb des Walzenspaltes mit mindestens einem Druck- oder Kompressionswalzenpaar. Gemäß der Erfindung besteht die Vorrichtung aus einem oder mehreren Druckwalzenpaaren, von denen jeweils die eine Walze drehbar, vorzugsweise in festen, demgegenüber die andere in höhen-, tiefen- und/oder seitenverstellbaren Lagerkörpern (oder Lagerseiten) abgestützt bzw. gelagert ist. Weiterhin enthält die Vorrichtung vorzugsweise mindestens eine Einrichtung zur regelbaren Temperierung, vorzugsweise Beheizung der Walzenoberfläche und/oder Einrichtungen, vorzugsweise mechanische und/oder hydraulische Einrichtungen, in Verbindung mit den Lagerkörpern in der verstellbaren Walze zur Aufnahme einer linearen Belastung im Walzenspalt von 950 N/mm bis 5.500 N/mm, vorzugsweise 1.200 N/mm bis 5.000 N/mm.

Mindestens ein Kompressionswalzenpaar der Vorrichtung und/oder dieses in Kombination mit mindestens zwei Stützwalzen besitzt einen erhöhten Widerstand gegen Durchbiegung oder eine erhöhte Biegefestigkeit bei Drücken von 50 bis 250 M Pa, vorzugsweise 90 bis 150 M Pa.

Nach einer weiteren bevorzugten Ausführungsform der erfindungsgemäßen Vorrichtung enthält die Vorrichtung mindestens ein Kompressionswalzenpaar und/oder dieses in Kombination mit mindestens zwei Stützwalzen für einen erhöhten Widerstand gegen Durchbiegung oder einer erhöhten Biegefestigkeit bei Drücken von 20 bis 49,99 MPa, vorzugsweise 25 bis 49,9 MPa. Diese Ausführungsform wird u.a. bei einer Temperaturführung bei Massetemperaturen über 333 K, vorzugsweise über 353 K, angewendet.

Gemäß einer bevorzugten Ausführungsform sind Bohrungen oder Führungen im Innenraum oder in der Nähe der Oberfläche mindestens einer Kompressionswalze und/oder Stützwalze für eine Wärmeübertragungsflüssigkeit und/oder Anordnung mindestens eines Wärmestrahlers und/oder eines Kontaktheizbandes, vorzugsweise an oder in der Nähe einer oder mehrerer Druck- oder Kompressionswalzen und/oder Düsen zur direkten Zuführung eines Wärmeübertragungsmittels, vorzugsweise einer Wärmeübertragungsflüssigkeit zu den Druck- oder Kompressionswalzen, Stützwalzen und/oder den Platten, Bahnen, plattenähnlichen Formteilen oder Profilen angeordnet. Hierdurch ist eine genaue Wärmeführung vor, während und nach der Walzpreßreckung möglich.

Die Vorrichtung enthält gemäß der Erfindung eine oder mehrere vor, zwischen und/oder nach den Walzenpaaren eingeschaltete, getrennt angeordnete oder kombinierte Einrichtungen für Transport, Weiterbearbeitung und/oder Richtungsänderung.

Nach einer weiteren anderen bevorzugten Ausführungsform ist mindestens ein Druck- oder Kompressionswalzenpaar in Kombination mit mindestens einer Reck- oder Zugvorrichtung angeordnet, um eine verstärkte Molekularorientierung in der Zugrichtung zu erzielen.

Durch eine Dreh- oder Wendevorrichtung in Nachschaltung mindestens eines Druck- oder Kompressionswalzenpaares gelingt es, eine Richtungsänderung der walzpreßgereckten und weiterzuverarbeitenden Platten, Bahnen, plattenähnlichen Formteile oder Profile durchzuführen, so daß auch der weitere Durchlauf in einer anderen Richtung erfolgen kann und andere Orientierungen erreicht werden können.

Nach einer weiteren bevorzugten Ausführungsform ist mindestens ein reversierbarer Antrieb des oder der Walzenpaare vorgesehen. Mit Hilfe dieser Ausführungsform gelingt es beispielsweise zusätzliche Kompressionswalzenpaare einzusparen.

Nach einer Ausführungsform erfolgt die Anordnung und Ausbildung der Lagerkörper des Druck- oder Kompressionswalzenpaares an einem Rahmengestell oder -gerüst derart, daß je Lagerseite einer Kraft von mehr als $3,5 \times 10^4$ N, vorzugsweise mehr als $0,5 \times 10^5$ N, widerstanden wird.

Die Anordnung und Ausbildung der Lagerkörper des Druck- oder Kompressionswalzenpaares an einem Rahmengestell oder -gerüst ist jedoch bevorzugt derart, daß je Lagerseite (Lagerseite ist die Gesamtzahl der Lagerkörper auf einer Walzenseite) einer Kraft von mehr als $1 \times 10^5$ N, vorzugsweise mehr als $2 \times 10^5$ N, widerstanden wird.

Für das erfindungsgemäße Verfahren können alle Kunststoffe, vorzugsweise Thermoplaste, z. B. Polyvinylidenchlorid, Polyamid, Polyacetal, Polyvinylfluorid, thermoplastische Polyester, Polycarbonat, Acrylnitril-Butadien-Styrolpolymerisate, Polyvinylidenfluorid, vorzugsweise jedoch Polyvinylchlorid, Polypropylen, Polyäthylen und deren Mischpolymerisate oder Legierungen eingesetzt werden.

Nach einer anderen Ausführungsform der erfindungsgemäßen Vorrichtung ist mindestens ein Kompressionswalzenpaar im Winkel von 1 bis 89°, vorzugsweise 45°, zur Durchlaufrichtung der Platte, der Bahn, des plattenähnlichen Formteiles oder des Profils und mindestens ein weiteres Kompressionswalzenpaar im Winkel von 91 bis 179°, vorzugsweise 135°, zur Durchlaufrichtung angeordnet. Mit dieser erfindungsgemäßen Vorrichtung gelingt es in einem Durchgang eine quasi biaxiale molekulare Orientierung zu erzielen.

Nach einer weiteren Ausführungsform sind anstelle mindestens eines Kompressionswalzenpaares 2 n + 1 Kompressionswalzen (n = 1 bis 6, vorzugsweise 1 und 2) übereinander oder untereinander und/oder seitlich nebeneinander angeordnet, von denen jeweils die erste und 2 n + 1., vorzugsweise die 1. und 3. und/oder 5. einen Antrieb in der gleichen Umlaufrichtung besitzen. Mit einer derartigen Einrichtung gelingt es mit geringem Anlagenaufwand und Raumbedarf die Walzenpreßreckung durchzuführen. Hierbei ist vorzugsweise jeweils die 1. und 3. Kompressionswalze in höhen-, tiefen- und/oder seitenverstellbaren Lagerkörpern abgestützt.

Nach einer weiteren bevorzugten Ausführungsform ist bzw. sind mindestens einer Kompressionswalze, vorzugsweise mehreren Kompressionswalzen, eine oder mehrere Stützwalze(n) zugeordnet, deren Durchmesser und/oder deren Biegefestigkeit größer ist als die der dazugehörigen Preßreckwalzen.

Beispiele:

Beispiel 1

Es wurden 8 mm dicke extrudierte Tafeln aus Polypropylen mehrfach walzpreßgereckt. Die Tafeln (Ausgangsplatten) wurden auf 373 K vorgewärmt, die Walzenoberflächentemperaturen betrugen 393 K. Die so hergestellten WPR-Platten wiesen 2 mm auf. Es wurde ein Preßreckgrad von 4 erzielt. Die Walzen hatten einen Durchmesser von 500 mm und eine Arbeitsbreite von 600 mm. Die Walzkraft betrug dabei $1,7 \cdot 10^6$ N, der Druck 100 M Pa und die Walzenumlaufgeschwindigkeit 10 m/min.

Die nach dem erfindungsgemäßen Verfahren und mit der erfindungsgemäßen Vorrichtung hergestellten Platten wiesen eine Zugfestigkeit (Streckgrenze) von 63 M Pa und eine Dehnung bei der Streckgrenze von 380 % auf.

Die Platten ließen sich auf einer Blechpresse mit kalter Form, ohne Niederhalter problemlos zu Formteilen verarbeiten.

Beispiel 2

Eine extrudierte Platte aus Polypropylen mit einer Dichte von 0,9 g/cm³ (gemessen nach DIN 53479) wurde biaxial (fünffach : abwechselnd dreimal längs und zweimal quer) walzpreßgereckt.

$v$ = 4 m/min
$T_M$ = 101 °C (Vorwärmtemperatur, d. h. beim ersten Walzen)
$T_W$ = 101 °C (Walzentemperatur)

Spalthöhenabfolge:

$h_1$ = 4 mm
$h_2$ = 2 mm
$h_3$ = 1,5 mm
$h_4$ = 1,0 mm
$h_5$ = 0,75 mm

Plattenabmessungen:

| | | |
|---|---|---|
| $S_0$ = 7,8 mm | $l_0$ = 400 mm | $b_0$ = 400 mm |
| $S_1$ = 6,0 mm | $l_1$ = 535 mm | $b_1$ = 405 mm |
| $S_2$ = 3,5 mm | $l_2$ = 520 mm | $b_2$ = 675 mm |
| $S_3$ = 2,8 mm | $l_3$ = 660 mm | $b_3$ = 660 mm |
| $S_4$ = 2,3 mm | $l_4$ = 655 mm | $b_4$ = 810 mm |
| $S_5$ = 2,0 mm | $l_5$ = 790 mm | $b_5$ = 800 mm |

$\lambda_1$ = 1,3
$\lambda_2$ = 1,7
$\lambda_3$ = 1,25

$\lambda_4$ = 1,22
$\lambda_5$ = 1,15
Ges = 3,9

$\Delta h_1$ = 3,8 mm
$\Delta h_2$ = 4,0 mm
$\Delta h_3$ = 2,0 mm
$\Delta h_4$ = 1,8 mm
$\Delta h_5$ = 1,55 mm

$p (k_f)$ = 20,2 MPa

Die hergestellten Platten wiesen verbesserte mechanische Eigenschaften auf.

Beispiel 3

Verfahren wie nach Beispiel 2, jedoch bei Drücken von 25,5 MPa.

Beispiel 4

Eine extrudierte Platte (Tafel) aus Propylenhomopolymerisat (Eltex HF 100) wurde monoaxial sechsfach walzpreßgereckt.

Verbeitungsparameter

$v$ (walzgeschwindigkeit) = 4 m/min
$T_M$ (Materialoberflächen-durchschnittstemperatur)- = 100 °C
$T_W$ (Walzentemperatur) = 100 °C

Spalthöhenabfolge

| | |
|---|---|
| $h_1$ = 4 mm | $h_4$ = 1,0 mm |
| $h_2$ = 2 mm | $h_5$ = 0,75 mm |
| $h_3$ = 1,5 mm | $h_6$ = 0,5 mm |

Plattenabmessungen:

| | | |
|---|---|---|
| $S_0$ = 7,8 mm | $l_0$ = 297 mm | $b_0$ = 506 mm |
| $S_1$ = 6,0 mm | $l_1$ = 383 mm | $b_1$ = 510 mm |
| $S_2$ = 3,7 mm | $l_2$ = 625 mm | $b_2$ = 510 mm |
| $S_3$ = 3,0 mm | $l_3$ = 750 mm | $b_3$ = 520 mm |
| $S_4$ = 2,7 mm | $l_4$ = 840 mm | $b_4$ = 525 mm |
| $S_5$ = 2,4 mm | $l_5$ = o. A. | $b_5$ = 532 mm |
| $s_6$ = 2,3 mm | $l_6$ = o. A. | $b_6$ = 535 mm |

Gesamtpreßreckgrad = 3,4

| | |
|---|---|
| $\Delta h_1$ = 3,8 mm | $\Delta h_4$ = 2,0 mm |
| $\Delta h_2$ = 4,0 mm | $\Delta h_5$ = 1,95 mm |
| $\Delta h_3$ = 2,2 mm | $\Delta h_6$ = 1,9 mm |

Walzkraft $_{max}$ = 980 kN (Gesamt)

Lagerkraft = 490 kN (je Lagerseite)

Linienlast/max. = 1830 N/mm
Druck (Flächenlast) = 84 MPa (N/mm²)

Die Zugfestigkeit der Platte, insbesondere in Längsrichtung, war nach der Walzpreßreckung verbessert (105 M Pa).

Zeichnungsbeschreibung

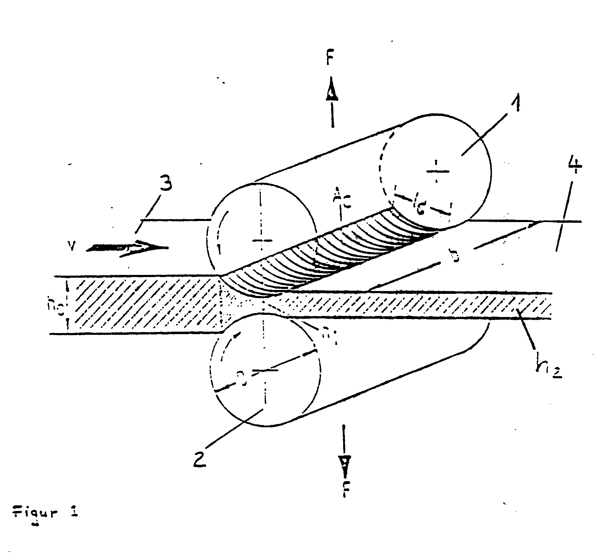

In den beigefügten Figuren 1 bis 5 sind Ausführungsformen der erfindungsgemäßen Vorrichtung schematisch dargestellt.

In Fig. 1 ist unter (1) ein Schnitt durch die höhen-und tiefenverstellbare Kompressionswalze oder Druckwalze und unter (2) die fest eingesetzte (jedoch um eine Achse drehbare) Kompressionswalze schematisch dargestellt. Unter $A_d$ ist die sog. gedrückte oder gepreßte Fläche, unter b die Breite der Platte, Bahn, des plattenähnlichen Formteiles oder Profils (vor dem Verpressen unter (30) nach dem Verpressen unter (4) bezeichnet), D der Durchmesser der Kompressionswalzen, $h_0$, die Materialdicke vor dem Verpressen, $h_1$ die Spalthöhe und die Enddicke $h_2$ wiedergegeben.

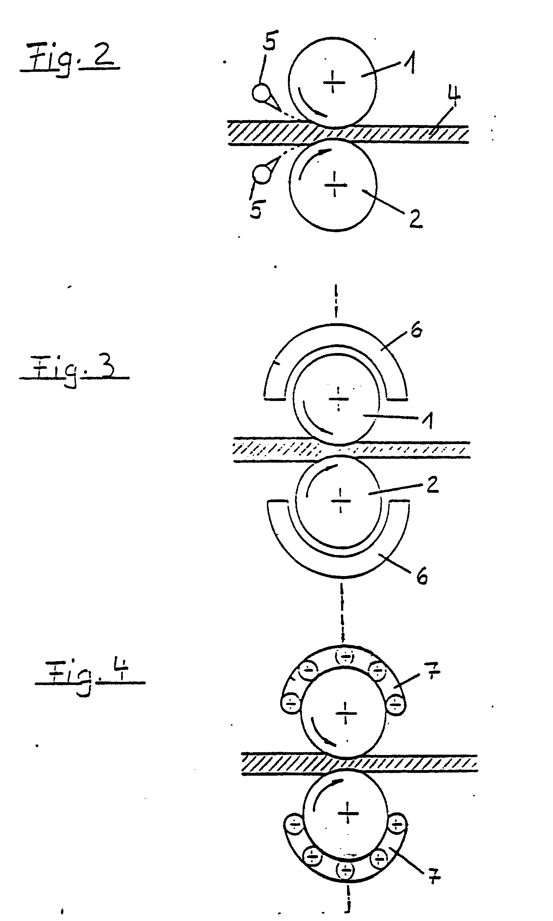

In Fig. 2 ist schematisch dargestellt, daß vor der erfindungsgemäßen Vorrichtung Düsen (5) angeordnet sind, aus denen eine Wärmeübertragungs- oder Wärmeregulierungsflüssigkeit aufgesprüht werden kann, die auf die Platte, Bahn, das plattenähnliche Formteil oder das Profil und/oder auf die Kompressionswalzen aufgebracht werden kann.

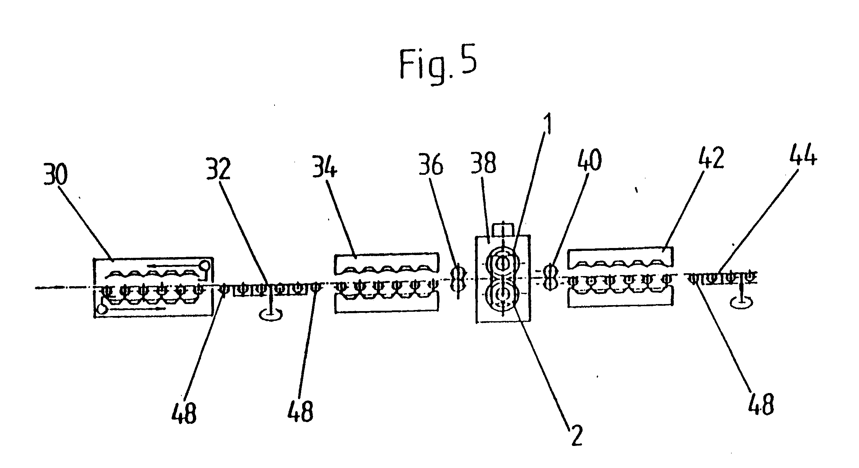

In Fig. 3 ist ein Wärmestrahler (6) so angeordnet, daß er die Kompressionswalzen und/oder Stützwalzen teilweise umgibt.

In Fig. 4 umgibt ein umlaufendes Heizband (7) teilweise die Kompressionswalzen.

In der Fig. 5 ist eine Einrichtung zum Walzpreßrecken extrudierter Thermoplastplatten schematisch dargestellt. Gemäß dieser Darstellung sind dem Walzpreßreckwerk spiegelbildlich Einrichtungen wie Zugwalzen, Rollentransportstrecke und Drehtisch vor- und nachgeschaltet, um mittels eines reversierbaren Antriebs der Walzen des Walz-Preß-Reckwerks das Walzpreßrecken für unterschiedliche Richtungen der molekularen Orientierung unter gegenläufigem Durchtritt auf einem einzigen Walzpreßreckwerk durchzuführen.

Die extrudierte Thermoplastplatte wird zunächst in einer Temperierstation (30) auf die erforderliche Walztemperatur erwärmt und über einen ersten Drehtisch (32) und eine Rollentransportstrecke (34) einem Zugwalzenpaar (36) zugeleitet. Auf dem Zugwalzenpaar (36) wird die Platte in das Walzpreßreckwerk (38) zwischen die untere fest angeordnete, jedoch um ihre Achse drehbare Walze (2) und die obere höhen- und tiefenverstellbare Kompressions- oder Druckwalze (1) eingeführt.

Die verstellbare obere Walze (1) wurde gegenüber der unteren festen Walze (2) zuvor auf die gewünschte Spalthöhe eingestellt, so daß die Materialdicke der Platte bei ihrem Durchgang zwischen den Walzen entsprechend abnimmt, während sie gleichzeitig in Preßreckrichtung gelängt wird. Die Temperatur der Walzenoberfläche ist entsprechend dem verarbeiteten Thermoplast eingestellt. Beim Austritt aus dem Walzpreßreckwerk (38) wird die Platte von einem zweiten Zugwalzenpaar (40) erfaßt und über eine weitere Rollentransportstrecke (42) einem Drehtisch (44) zugeleitet.

Auf dem Drehtisch wird die Platte für eine abweichende Richtung der molekularen Orientierung gedreht. Für die hierfür durchzuführende Walzpreßreckung wird sodann die Platte in Gegenrichtung, in der Darstellung von rechts nach links, über die Rollentransportstrecke (42), das Zugwalzenpaar (40) in das Walzpreßreckwerk zurückgeführt. Wärmeverluste werden jeweils beim Durchlauf durch die Rollentransportstrecken (34) und (42) sowie durch das Walzpreßreckwerk (38) ausgeglichen, so daß die Temperatur der zu verarbeitenden Platte einzustellen und diese Temperatur auch während der Verarbeitung aufrecht zu erhalten ist. Zwischen Temperierstation (30) und Drehtisch (32) bzw. zwischen den Drehtischen (32), (44) und den Rollentransportstrecken (34), (42) sind jeweils Stützrollen (48) angeordnet.

**Patentansprüche**

1. Verfahren zur Herstellung von Platten, Bahnen, plattenähnlichen Formteilen oder Profilen aus Kunststoffen, vorzugsweise Thermoplasten, von hoher mechanischer Festigkeit aufgrund einer molekularen Orientierung durch Walzpressrecken innerhalb des Walzenspaltes mindestens eines Druck- oder Kompressionswalzenpaares bei Walzen-und Materialtemperaturen unterhalb des Kristallitschmelzpunktes oder der Erweichungstemperatur des Kunststoffes und oberhalb 303 K unter Druckverstreckung, dadurch gekennzeichnet, daß das Walzpreßrecken der Platten, Bahnen, plattenähnlichen Formteile oder Profile mit gleicher oder annähernd gleicher Umfangsgeschwindigkeit der Druck- oder Kompressionswalzen oder ohne Friktion bei Drücken von

50 bis 250 M Pa, vorzugsweise
90 bis 150 M Pa,

bei einem Preßreckgrad (Verhältnis der Einlaufplattendicke oder Materialdicke vor dem Verpressen zur Auslaufplattendicke oder Materialdicke nach dem Verpressen) von über 2,1 , erfolgt.

2. Verfahren zur Herstellung von Platten, Bahnen, plattenähnlichen Formteilen oder Profilen aus Kunststoffen, vorzugsweise Thermoplasten, von hoher mechanischer Festigkeit aufgrund einer molekularen Orientierung durch Recken, vorzugsweise Walzpressrecken innerhalb des Walzenspaltes mindestens eines Druck- oder Kompressionswalzenpaares bei Walzen- und Materialtemperaturen, unterhalb des Kristallitschmelzpunktes oder der Erweichungstemperatur des Kunststoffes und oberhalb 303 K unter Druckverstreckung, wobei das Walzpreßrecken der Platten, Bahnen, plattenähnlichen Formteile oder Profile mit gleicher oder annähernd gleicher Umfangsgeschwindigkeit der Druck- oder Kompressionswalzen oder ohne Friktion erfolgt, dadurch gekennzeichnet, daß das Walzpreßrecken bei Drücken von

20 bis 150 MPa, vorzugsweise
25 bis 145 MPa, und

bei Temperaturen von

über 333 K, vorzugsweise
über 353 K (berechnet als Materialtemperatur)

und/oder bei Verwendung von Zugkräften sowie bei einem Reckgrad (Verhältnis der Einlaufplattendicke oder Materialdicke vor dem Verpressen (mit oder ohne zusätzlichem Zugrecken) zur Auslaufplattendicke oder Materialdicke nach dem Verpressen (mit oder ohne zusätzlichem Zugrekken)) von

über 1,1, vorzugsweise
über 1,3,

erfolgt.

3. Verfahren nach Ansprüchen 1 und 2, dadurch gekennzeichnet, daß von dem Druck- oder Kompressionswalzenpaar über eine Breite der Platte, Bahn, dem plattenähnlichen Formteil oder Profil von

300 bis 3000 mm, vorzugsweise
500 bis 2500 mm,

eine Walzkraft (Summe der auf die Lager einer Druck-oder Kompressionswalze einwirkenden Kräfte) größer als 60 000 N, vorzugsweise größer als 190 000 N, ausgeübt wird.

4. Verfahren nach einem oder mehreren der Ansprüche 1 bis 3, dadurch gekennzeichnet, daß auf die Platte, Bahn, das plattenähnliche Formteil oder das Profil eine Walzkraft (Summe der auf die Lager einer Druck- oder Kompressionswalze einwirkenden Kräfte) von

$2 \times 10^5$ N - $\bar{9} \times 10^6$ N, vorzugsweise
$4 \times 10^5$ N - $8 \times 10^6$ N,

im Walzenspalt ausgeübt wird, wobei die anzuwendende Walzkraft direkt von der walzenbeaufschlagten Breite der Platte, Bahn oder des plattenähnlichen Formteiles oder des Profils und dem Walzenradius und der Differenz aus Einlaufplattendicke bzw. Einlaufprofildicke und der Spalthöhe, vorzugsweise direkt von der Walzenbeaufschlagten Breite der Platte, Bahn oder des plattenähnlichen Formteiles oder des Profils und der Quadratwurzel aus dem Produkt des Walzenradius und der Differenz aus Einlaufplattendicke bzw. Einlaufprofildicke und der Spalthöhe, abhängig ist.

5. Verfahren nach einem oder mehreren der Ansprüche 1 bis 3, dadurch gekennzeichnet, daß auf die Platte, Bahn, das plattenähnliche Formteil oder das Profil eine Walzkraft (Summe der auf die Lager einer Druck- oder Kompressionswalze einwirkenden Kräfte) von

$7 \times 10^4$ N - $1,9 \times 10^5$ N, vorzugsweise
$1 \times 10^5$ N - $1,9 \times 10^5$ N,

im Walzenspalt ausgeübt wird, wobei die anzuwendende Walzkraft direkt von der walzenbeaufschlagten Breite der Platte, Bahn oder des plattenähnlichen Formteiles oder des Profils und dem Walzenradius und der Differenz aus Einlaufplattendicke bzw. Einlaufprofildicke und der Spalthöhe, vorzugsweise direkt von der Walzenbeaufschlagten Breite der Platte, Bahn oder des plattenähnlichen Formteiles oder des Profils und der Quadratwurzel aus dem Produkt des Walzenradius und der Differenz aus Einlaufplattendicke bzw. Einlaufprofildicke und der Spalthöhe, abhängig ist, wobei das Walzpreßrecken bei Drücken von

20 bis 150 MPa, vorzugsweise
25 bis 145 MPa,

bei Temperaturen von

über 333 K, vorzugsweise
über 353 K (berechnet als Materialtemperatur)

und/oder bei Mitverwendung von Zugkräften sowie bei einem Preßreckgrad (Verhältnis der Einlaufplattendicke oder Materialdicke vor dem Verpressen zur Auslaufplattendicke oder Materialdicke nach dem Verpressen - mit oder ohne zusätzlichem Zugrecken) von

über 1,1, vorzugsweise
über 1,3,

erfolgt.

6. Verfahren nach einem oder mehreren der Ansprüche 1 bis 5, dadurch gekennzeichnet, daß ein Preßreckgrad von

2,3 bis 10, vorzugsweise
2,5 bis 8,

eingehalten wird.

7. Verfahren nach einem oder mehreren der Ansprüche 1 bis 6, dadurch gekennzeichnet, daß der Preßreckgrad in Abhängigkeit von der Spalthöhe, des Walzenradius und/oder der Breite der Platte, der Bahn, des plattenähnlichen Formteiles oder Profils, der Zahl und Richtung(en) der Walzpreßreckungen, der Walzen-, Materialtemperaturen und/oder der Walzengeschwindigkeit eingestellt wird.

8. Verfahren nach einem oder mehreren der Ansprüche 1 bis 7, dadurch gekennzeichnet, daß die Linienlast

950 N/mm bis 5.500 N/mm, vorzugsweise
1.200 N/mm bis 5.000 N/mm.

beträgt.

9. Verfahren nach einem oder mehreren der Ansprüche 1 bis 8, dadurch gekennzeichnet, daß bei aufeinanderfolgenden Walzpreßreckungen eine Wärmeübertragung auf die Platte, Bahn, das plattenähnliche Formteil oder das Profil durch mindestens eine Kompressions- und/oder Stützwalze unmittelbar, vorzugsweise unter Verwendung im Innenraum oder in Nähe ihrer Oberfläche angeordneter Bohrungen oder Führungen für eine Wärmeübertragungsflüssigkeit und/oder ihre Temperierung durch Strahlung und/oder Kontaktheizung erfolgt.

10. Verfahren nach einem oder mehreren der Ansprüche 1 bis 9, dadurch gekennzeichnet, daß in Vor-und/oder Nachschaltung zum Walzpressrecken eine Temperaturkonditionierung der Platte, Bahn, des plattenähnlichen Formteils oder des Profils, vorzugsweise unter Verwendung einer Vorrichtung zur Vermeidung einer Wärmeabgabe an die Umgebung erfolgt.

11. Verfahren nach einem oder mehreren der Ansprüche 1 bis 10, dadurch gekennzeichnet, daß die Platte, die Bahn, das plattenähnliche Formteil oder das Profil, vorzugsweise innerhalb der Relaxationszeit, nach dem ersten oder mehrfachen Walzpreßrecken in Spaltebene zur Durchlaufrichtung um einen Winkel, vorzugsweise um 90°, geschwenkt und unter Einstellung einer gleichen, vorzugsweise verringerten Spalthöhe als bei der vorausgegangenen Verpressung erneut mindestens einem Walzpreßrecken unterworfen wird.

12. Verfahren nach einem oder mehreren der Ansprüche 1 bis 11, dadurch gekennzeichnet, daß die Platte, Bahn, das plattenähnliche Formteil oder das Profil, vorzugsweise innerhalb der Relaxationszeit, nach dem ersten oder mehrfachen Walzpreßrecken in Spaltenebene zur Durchlaufrichung um 10° bis 80° geschwenkt, unter Einstellung einer gleichen, vorzugsweise verringerten Spalthöhe als bei dem vorausgegangenen Walzpreßrecken erneut einer Walzpreßreckung und bezüglich der Durchlaufrichtung spiegelbildlich nochmals geschwenkt unter gleicher, vorzugsweise verringerter Spalthöhe ein weiteres Mal einer Walzpreßreckung unterworfen wird.

13. Verfahren nach einem oder mehreren der Ansprüche 1 bis 12, dadurch gekennzeichnet, daß die Platte, Bahn, das plattenähnliche Formteil oder Profil, vorzugsweise innerhalb der Relaxationszeit, nach dem ersten oder mehrfachen Walzpreßrecken in Gegenrichtung unter Einstellung einer gleichen, vorzugsweise verringerten Spalthöhe als bei der vorausgegangenen Verpressung durch ein Kompressionswalzenpaar, vorzugsweise durch das gleiche Kompressionswalzenpaar mit reversierbarem Antrieb, hindurchgeleitet wird.

14. Verfahren nach einem oder mehreren der Ansprüche 1 - 13, dadurch gekennzeichnet, daß die Platte, Bahn, das plattenähnliche Formteil oder das Profil durch mindestens ein in einem Winkel von 1 bis 89°, vorzugsweise 45°, zur Durchlaufrichtung derselben angeordneten ersten Kompressionswalzenpaar und nachfolgend von mindestens einem weiteren im Winkel von 91 bis 179°, vorzugsweise 135°, zur Durchlaufrichtung angeordneten Kompressionswalzenpaar druckbeaufschlagt und walzpreßgereckt wird.

15. Verfahren nach einem oder mehreren der Ansprüche 1 bis 14, dadurch gekennzeichnet, daß nach, während oder vor dem Durchtritt der Druckbeaufschlagten Fläche durch ein Walzenpaar, vorzugsweise das letzte Kompressionswalzenpaar, eine Zugkraft in Durchlaufrichtung auf die Platte, Bahn, das plattenähnliche Formteil oder Profil ausgeübt wird.

16. Vorrichtung zur Herstellung von Platten, Bahnen, plattenähnlichen Formteilen oder Profilen aus Kunststoffen, vorzugsweise Thermoplasten, von hoher mechanischer Festigkeit aufgrund einer molekularen Orientierung durch Walzpreßrecken innerhalb des Walzenspaltes mit mindestens einem Druck- oder Kompressionswalzenpaar, gekennzeichnet durch ein oder mehrere Druckwalzenpaare, von denen jeweils die eine Walze drehbar, vorzugsweise in festen, demgegenüber die andere in höhen-, tiefen-und/oder seitenverstellbaren Lagerkörpern abgestützt ist, Einrichtungen zur regelbaren Temperierung, vorzugsweise Beheizung der Walzenoberfläche und Einrichtungen, vorzugsweise mechanische und/oder hydraulische Einrichtungen, in Verbindung mit den Lagerkörpern der verstellbaren Walze zur Aufnahme einer linearen Belastung im Walzenspalt von 950 N/mm bis 5.500 N/mm.

17. Vorrichtung nach Anspruch 16, gekennzeichnet durch mindestens ein Kompressionswalzenpaar und/oder dieses in Kombination mit mindestens zwei Stützwalzen für einen erhöhten Widerstand gegen Durchbiegung oder einer erhöhten Biegefestigkeit bei Drücken von

50 bis 250 M Pa, vorzugsweise
90 bis 150 M Pa.

18. Vorrichtung nach Anspruch 16, gekennzeichnet durch mindestens ein Kompressionswalzenpaar und/oder dieses in Kombination mit mindestens zwei Stützwalzen für einen erhöhten Widerstand gegen Durchbiegung oder einer erhöhten Biegefestigkeit bei Drücken von

20 bis 49,99 M Pa, vorzugsweise
25 bis 49,9 M Pa.

19. Vorrichtung nach einem oder mehreren der Ansprüche 16 bis 18, gekennzeichnet durch Bohrungen oder Führungen im Innenraum oder in der Nähe der Oberfläche mindestens einer Kompressionswalze und/oder Stützwalze für eine Wärmeübertragungsflüssigkeit und/oder Anordnung mindestens eines Wärmestrahlers und/oder eines Kontaktheizbandes, vorzugsweise an oder in der Nähe einer oder mehrerer Druck- oder Kompressionswalzen und/oder Stützwalzen und/oder Düsen zum direkten Zuführen eines Wärmeübertragungsmittels, vorzugsweise einer Wärmeübertragungsflüssigkeit, zu den Druck- oder Kompressionswalzen, Stützwalzen und/oder den Platten, Bahnen, plattenähnlichen Formteilen oder Profilen.

20. Vorrichtung nach einem oder mehreren der Ansprüche 16 bis 19, gekennzeichnet durch eine oder mehrere vor, zwischen und/oder nach den Walzenpaaren eingeschaltete, getrennt angeordnete oder kombinierte Einrichtung für Transport, Weiterbearbeitung und/oder Richtungsänderung.

21. Vorrichtung nach einem oder mehreren der Ansprüche 16 bis 20, gekennzeichnet durch mindestens ein Druck- oder Kompressionswalzenpaar in Kombination mit mindestens einer Reck- oder Zugvorrichtung.

22. Vorrichtung nach einem oder mehreren der Ansprüche 16 bis 21, gekennzeichnet durch eine Dreh-oder Wendevorrichtung in Nachschaltung mindestens eines Druck- oder Kompressionswalzenpaares zur Richtungsänderung der walzpreßgereckten und weiterzuverarbeitenden Platten, Bahnen, plattenähnlichen Formteile oder Profile.

23. Vorrichtung nach einem oder mehreren der Ansprüche 16 bis 22, gekennzeichnet durch mindestens einen reversierbaren Antrieb des oder der Walzenpaare.

24. Vorrichtung nach einem oder mehreren der Ansprüche 16 bis 23, gekennzeichnet durch Anordnung und Ausbildung der Lagerkörper des Druck- oder Kompressionswalzenpaares an einem Rahmengestell oder -gerüst, derart, daß je Lagerseite einer Kraft von

mehr als $3,5 \times 10^4$ N, vorzugsweise
mehr als $0,5 \times 10^5$ N,

widerstanden wird.

25. Vorrichtung nach einem oder mehreren der Ansprüche 16 bis 23, gekennzeichnet durch Anordnung und Ausbildung der Lagerkörper des Druck- oder Kompressionswalzenpaares an einem Rahmengestell oder -gerüst, derart, daß je Lagerseite einer Kraft von

mehr als $1 \times 10^5$ N, vorzugsweise

mehr als 2 x $10^5$ N,

widerstanden wird.

26. Vorrichtung nach eine m oder mehreren der Ansprüche 16 - 25, dadurch gekennzeichnet, daß mindestens ein Kompressionswalzenpaar im Winkel von 1 bis 89°, vorzugsweise 45°, zur Durchlaufrichtung der Platte, der Bahn, des plattenähnlichen Formteiles oder des Profils und mindestens ein weiteres Kompressionswalzenpaar im Winkel von 91 bis 179°, vorzugsweise 135°, zur Durchlaufrichtung angeordnet ist.

27. Vorrichtung nach einem oder mehreren der Ansprüche 16 - 26, dadurch gekennzeichnet, daß anstelle mindestens eines Kompressionswalzenpaares 2 n + 1 Kompressionswalzen (n = 1 bis 6, vorzugsweise 1 und 2) übereinander oder untereinander und/oder seitlich nebeneinander angeordnet sind, von denen jeweils die erste und 2 n + 1., vorzugsweise die 1. und 3. und/oder 5. einen Antrieb in der gleichen Umlaufrichtung besitzen.

28. Vorrichtung nach einem oder mehreren der Ansprüche 16 - 27, dadurch gekennzeichnet, daß jeweils die 1. und 3. Kompressionswalze in höhen-, tiefen- und/oder seitenverstellbaren Lagerkörpern abgestützt ist.

29. Vorrichtung nach einem oder mehreren der Ansprüche 16 bis 28, gekennzeichnet durch Stützwalzen, deren Durchmesser oder deren Biegefestigkeit größer ist als die der dazugehörigen Preßreckwalzen.

**Claims**

1. Method for producing plates, webs, plate-like shaped pieces or profiles from plastics, preferably thermoplastics, of high mechanical strength on the basis of molecular orientation by roller-pressing-stretching within the roller nip of at least one pair of pressure rollers or compression rollers at rolling and material temperatures below the crystal melting point or the softening temperature of the plastic and above 303 K with pressure-stretching, characterised in that the roller-pressing-stretching of the plates, webs, plate-like shaped pieces or profiles takes place at the same or approximately the same peripheral speed of the pressure rollers or compression rollers or without friction at pressures of

50 to 250 MPa, preferably

90 to 150 MPa,

at a degree of pressing reduction (ratio of the plate thickness upon entry or material thickness before pressing to the plate thickness after emerging or material thickness after pressing) of more than 2.1.

2. Method for producing plates, webs, plate-like shaped pieces or profiles from plastics, preferably thermoplastics, of high mechanical strength on the basis of molecular orientation by stretching, preferably roller-pressing-stretching, within the roller nip of at least one pair of pressure rollers or compression rollers at rolling and material temperatures below the crystal melting point or the softening temperature of the plastic and above 303 K with pressure-stretching, with the roller-pressing-stretching of the plates, webs, plate-like shaped pieces or profiles taking place at the same or approximately the same peripheral speed of the pressure rollers or compression rollers or without friction, characterised in that the roller-pressing-stretching takes place at pressures of

20 to 150 MPa, preferably
25 to 145 MPa, and

at temperatures of

above 333 K, preferably
above 353 K (calculated as material temperature)

and/or using tensile forces and also at a total reduction (ratio of the plate thickness upon entry or material thickness before pressing (with or without additional drawing-stretching) to the plate thickness after emerging or material thickness after pressing (with or without additional drawing-stretching)) of

more than 1.1, preferably
more than 1.3.

3. Method according to Claims 1 and 2, characterised in that a roll force (total of the forces acting on the bearings of a pressure roller or compression roller) of more than 60,000 N, preferably more than 190,000 N, is exerted by the pair of pressure rollers or compression rollers over a width of the plate, web, plate-like shaped piece or profile of

300 to 3000 mm, preferably
500 to 2500 mm.

4. Method according to one or more of Claims 1 to 3, characterised in that a roll force (total of the forces acting on the bearings of a pressure roller or compression roller) of

$2 \times 10^5$ N - $9 \times 10^6$ N, preferably
$4 \times 10^5$ N - $8 \times 10^6$ N,

is exerted on the plate, web, plate-like shaped piece or the profile in the roller nip, with the roll force to be applied being directly dependent on the width of the plate, web or plate-like shaped piece or profile on which the rollers act and the roller radius and the difference between the plate thickness or profile thickness upon entry and the nip height, preferably directly on the width of the plate, web or plate-like shaped piece or profile on which the rollers act and the square root of the product of the roller radius and the difference between the plate thickness or profile thickness upon entry and the nip height.

5. Method according to one or more of Claims 1 to 3, characterised in that a roll force (total of the forces acting on the bearings of a pressure roller or compression roller) of

$7 \times 10^4$ N - $1.9 \times 10^5$ N, preferably
$1 \times 10^5$ N - $1.9 \times 10^5$ N,

is exerted on the plate, web, plate-like shaped piece or profile in the roller nip, with the roll force to be applied being directly dependent on the width of the plate, web or plate-like shaped piece or profile on which the rollers act and the roller radius and the difference between the plate thickness or profile thickness upon entry and the nip height, preferably directly on the width of the plate, web or plate-like shaped piece or profile on which the rollers act and the square root of the product of the roller radius and the difference between the plate thickness or profile thickness upon entry and the nip height, with the roller-pressing-stretching taking place at pressures of

20 to 150 MPa, preferably
25 to 145 MPa,

at temperatures of

above 333 K, preferably
above 353 K (calculated as material temperature)

and/or with the co-use of tensile forces and also at a degree of pressing reduction (ratio of the plate thickness upon entry or material thickness before pressing to the plate thickness after emerging or material thickness after pressing - with or without additional drawing-stretching) of

more than 1.1, preferably
more than 1.3.

6. Method according to one or more of Claims 1 to 5, characterised in that a degree of pressing reduction of

2.3 to 10, preferably
2.5 to 8,

is maintained.

7. Method according to one or more of Claims 1 to 6, characterised in that the degree of pressing reduction is set dependent on the nip height, the roller radius and/or the width of the plate, the web, the plate-like shaped piece or profile, the number and direction(s) of the roller-pressing-stretching operations, the roller temperatures, material temperatures and/or the roller speed.

8. Method according to one or more of Claims 1 to 7, characterised in that the line load is

950 N/mm to 5,500 N/mm, preferably
1,200 N/mm to 5,000 N/mm.

9. Method according to one or more of Claims 1 to 8, characterised in that in the case of successive roller-pressing-stretching operations a transfer of heat to the plate, web, plate-like shaped piece or profile by at least one compression roller and/or backing roller takes place directly, preferably using bores or guides for a heat transfer liquid which are located in the interior or in the vicinity of its surface and/or the temperature control thereof takes place by radiation and/or contact heating.

10. Method according to one or more of Claims 1 to 9, characterised in that prior to or after the roller-pressing-stretching temperature-conditioning of the plate, web, plate-like shaped piece or profile takes place, preferably using an apparatus for preventing heat from being lost into the surrounding area.

11. Method according to one or more of Claims 1 to 10, characterised in that the plate, the web, the plate-like shaped piece or the profile, preferably within the relaxation period, after the first or multiple roller-pressing-stretching operation(s) in the nip plane is pivoted by an angle, preferably by 90°, to the direction of passage and, with an identical, preferably reduced, nip height being set compared with the preceding pressing operation, is again subjected to at least one roller-pressing-stretching operation.

12. Method according to one or more of Claims 1 to 11, characterised in that the plate, web, plate-like shaped piece or profile, preferably within the relaxation period, after the first or multiple roller-pressing-stretching operation(s) is pivoted in the nip plane by 10° to 80° to the direction of passage, with an identical, preferably reduced nip height being set compared with the preceding roller-pressing-stretching operation, is again subjected to a roller-pressing-stretching operation and, pivoted once more mirror-invertedly with respect to the direction of passage with an identical, preferably reduced, nip height, is subjected a further time to a roller-pressing-stretching operation.

13. Method according to one or more of Claims 1 to 12, characterised in that the plate, web, plate-like shaped piece or profile, preferably within the relaxation period, after the first or multiple roller-pressing-stretching operation(s), with an identical, preferably reduced, nip height being set compared with the preceding pressing operation, is passed in the opposite direction through a pair of compression rollers, preferably through the same pair of compression rollers with a reversible drive.

14. Method according to one or more of Claims 1 - 13, characterised in that the plate, web, plate-like shaped piece or profile is acted on by pressure and is subjected to roller-pressing-stretching by at least one first pair of compression rollers arranged at an angle of 1 to 89°, preferably 45°, to the direction of passage of said plate or the like, and then by at least one further pair of compression rollers arranged at an angle of 91 to 179°, preferably 135°, to the direction of passage.

15. Method according to one or more of Claims 1 to 14, characterised in that a tensile force is exerted on the plate, web, plate-like shaped piece or profile in the direction of passage after, during or before the passage of the surface which is acted on by pressure through a pair of rollers, preferably the final pair of compression rollers.

16. Apparatus for producing plates, webs, plate-like shaped pieces or profiles from plastics, preferably thermoplastics, of high mechanical strength on the basis of molecular orientation by roller-pressing-stretching within the roller nip with at least one pair of pressure rollers or compression rollers, characterised by one or more pairs of pressure rollers, of which one roller each time is rotatably supported, preferably in fixed with respect to the other in bearing bodies which are adjustable in height, depth and/or laterally, means for adjustable temperature control, preferably heating means for the roller surface and means, preferably mechanical and/or hydraulic means, in conjunction with the bearing bodies of the adjustable roller for absorbing a linear load in the roller nip of 950 N/mm to 5,500 N/mm.

17. Apparatus according to Claim 16, characterised by at least one pair of compression rollers and/or said pair in combination with at least two backing rollers for increased resistance to sag or increased flexural strength at pressures of

    50 to 250 MPa, preferably
    90 to 150 MPa.

18. Apparatus according to Claim 16, characterised by at least one pair of compression rollers and/or said pair in combination with at least two backing rollers for increased resistance to sag or increased flexural strength at pressures of

    20 to 49.99 MPa, preferably
    25 to 49.9 MPa.

19. Apparatus according to one or more of Claims 16 to 18, characterised by bores or guides in the interior or in the vicinity of the surface of at least one compression roller and/or backing roller for a heat transfer liquid and/or arrangement of at least one heat radiator and/or a contact heating strip, preferably on or in the vicinity of one or more pressure or compression rollers and/or backing rollers and/or nozzles for directly supplying a heat transfer medium, preferably a heat transfer liquid, to the pressure or compression rollers, backing rollers and/or the plates, webs, plate-like shaped pieces or profiles.

20. Apparatus according to one or more of Claims 16 to 19, characterised by one or more separately arranged or combined means for transportation, further processing and/or changing direction inserted before, between and/or after the pairs of rollers.

21. Apparatus according to one or more of Claims 16 to 20, characterised by at least one pair of pressure or compression rollers in combination with at least one stretching or drawing device.

22. Apparatus according to one or more of Claims 16 to 21, characterised by a rotation or turning means succeeding at least one pair of pressure or compression rollers for changing the direction of the plates, webs, plate-like shaped pieces or profiles which have been subjected to roller-pressing-stretching and which are to be processed further.

23. Apparatus according to one or more of Claims 16 to 22, characterised by at least one reversible drive for the pair or pairs of rollers.

24. Apparatus according to one or more of Claims 16 to 23, characterised by the arrangement and formation of the bearing bodies of the pair of pressure or compression rollers on a frame mount or frame stand in such a manner that a force of

more than $3.5 \times 10^4$ N, preferably
more than $0.5 \times 10^5$ N,

is resisted per bearing side.

25. Apparatus according to one or more of Claims 16 to 23, characterised by the arrangement and formation of the bearing bodies of the pair of pressure or compression rollers on a frame mount or frame stand in such a manner that a force of

more than $1 \times 10^5$ N, preferably
more than $2 \times 10^5$ N,

is resisted per bearing side.

26. Apparatus according to one or more of Claims 16 - 25, characterised in that at least one pair of compression rollers is arranged at an angle of 1 to 89°, preferably 45°, to the direction of passage of the plate, the web, the plate-like shaped piece or the profile and at least one further pair of compression rollers is arranged at an angle of 91 to 179°, preferably 135°, to the direction of passage.

27. Apparatus according to one or more of Claims 16 - 26, characterised in that instead of at least one pair of compression rollers 2 n + 1 compression rollers (n = 1 to 6, preferably 1 and 2) are arranged one above the other or one below the other and/or laterally adjacent to one another, of which the first and the 2 n + 1-th, preferably the first and third and/or fifth, have a drive in the same direction of rotation.

28. Apparatus according to one or more of Claims 16 - 27, characterised in that each time the first and third compression rollers are supported in bearing bodies which are adjustable in height, depth and/or laterally.

29. Apparatus according to one or more of Claims 16 to 28, characterised by backing rollers, the diameter of which or the flexural strength of which is greater than that of the associated pressing-stretching rollers.

**Revendications**

1. Procédé de production de plaques, feuilles, pièces moulées en forme de plaques ou profilés de matières plastiques, de préférence, des matières thermoplastiques, de résistance mécanique plus élevée du fait d'une orientation moléculaire obtenue par étirage dans l'intervalle d'espacement d'au moins deux cylindres presseurs ou compresseurs à des températures des cylindres et de la matière inférieures au point de fusion des cristallites ou au point de ramollissement de la matière synthétique et supérieures à 303° K sous étirage sous pression, le procédé étant caractérisé en ce que le laminage des plaques, feuilles, pièces moulées en forme de plaques ou profilés se fait à une vitesse périphérique des cylindres presseurs ou compresseurs égale ou approximativement égale, c'est-à-dire sans frottement, à des pressions de

50 à 250 MPa, de préférence
90 à 150 MPa,

avec un degré d'étirage (rapport de l'épaisseur de la plaque entrante, c'est-à-dire l'épaisseur de la matière avant la compression, à l'épaisseur de la plaque sortante, c'est-à-dire l'épaisseur de la matière après la compression) de plus de 2,1.

2. Procédé de production de plaques, feuilles, pièces moulées en forme de plaques ou profilés de matières plastiques, de préférence, des matières thermoplastiques, de résistance mécanique plus élevée du fait d'une orientation moléculaire obtenue par étirage dans l'intervalle d'espacement d'au moins deux cylindres presseurs ou compresseurs à des températures des cylindres et de la matière inférieures au point de fusion des cristallites ou au point de ramollissement de la matière synthétique et supérieures à 303° K sous étirage sous pression, dans lequel le laminage des plaques, feuilles, pièces moulées en forme de plaques ou profilés se fait à une vitesse périphérique des cylindres presseurs ou compresseurs égale ou approximativement égale, c'est-à-dire sans frottement, le procédé étant caractérisé en ce que l'étirage sous pression se fait sous des pressions de

20 à 150 MPa, de préférence
25 à 145 MPa,

et à des températures de

plus de 333° K, de préférence
plus de 353° K (comptée comme température de la matière) et/ou avec l'emploi conjoint de forces de traction ainsi qu'avec un degré d'étirage (rapport de l'épaisseur de la plaque entrante, c'est-à-dire l'épaisseur de la matière avant la compression (avec ou sans étirage par traction supplémentaire), à l'épaisseur de la plaque sortante, c'est-à-dire l'épaisseur de la matière après la compression (avec ou sans étirage par traction supplémentaire)) de

plus de 1,1, de préférence
plus de 1,3.

3. Procédé selon les revendications 1 et 2, caractérisé en ce qu'une force de laminage (somme des forces exercées sur les paliers d'un cylindre presseur ou compresseur) supérieure à 60.000 N, de préférence supérieure à 190.000 N est exercée par la paire de cylindres presseurs ou compresseurs sur une largeur de la plaque, de la feuille, de la pièce moulée en forme de plaque ou du profilé de

300 à 3000 mm, de préférence
500 à 2500 mm.

4. Procédé selon l'une et/ou l'autre des revendications 1 à 3, caractérisé en ce que l'on applique sur la plaque, la feuille, la pièce moulée en forme de plaque ou le profilé une force d'étirage (somme des forces agissant sur les paliers d'un cylindre presseur ou compresseur) de

$2 \times 10^5$ M - $9 \times 10^6$ N, de préférence
$4 \times 10^5$ N - $8 \times 10^6$ N,

dans l'intervalle d'espacement des cylindres, en sorte que la force d'étirage à appliquer soit fonction directe de la largeur de la plaque, de la feuille, de la pièce moulée en forme de plaque ou du profilé sollicité(e) par les cylindres et du rayon des cylindres ainsi que de la différence entre l'épaisseur de la plaque entrante, respectivement l'épaisseur du profilé entrant et la hauteur de l'espacement, de préférence en fonction directe de la largeur de la plaque, de la feuille, de la pièce moulée en forme de plaque ou du profilé et de la racine carrée du produit du rayon des cylindres et de la différence entre l'épaisseur de la plaque entrante, respectivement l'épaisseur du profilé entrant et de la largeur de l'espacement.

5. Procédé selon l'une et/ou l'autre des revendications 1 à 3, caractérisé en ce que l'on applique sur la plaque, la feuille, la pièce moulée en forme de plaque ou le profilé une force d'étirage (somme des forces agissant sur les paliers d'un cylindre presseur ou compresseur) de

$7 \times 10^4$ N - $1,9 \times 10^5$ N, de préférence
$1 \times 10^5$ N - $1,9 \times 10^5$ N

dans l'espacement des cylindres, en sorte que la force d'étirage à appliquer soit directement fonction de la largeur de la plaque, de la feuille, de la pièce moulée en forme de plaque ou du profilé sollicitée par les cylindres et du rayon des cylindres ainsi que de la différence de l'épaisseur de la plaque entrante, respectivement de l'épaisseur du profilé entrant, et de la hauteur de l'espacement, de préférence en fonction directe de la largeur de la plaque, de la feuille, de la pièce moulée en forme de plaque ou du profilé sollicitée par les cylindres et de la racine carrée du produit du rayon des cylindres et de la différence entre l'épaisseur de la plaque entrante, respectivement l'épaisseur du profilé entrant et la hauteur de l'espacement, l'étirage sous pression se faisant à des pressions de

20 à 150 MPa, de préférence
25 à 145 MPa,

à des températures de

plus de 333° K, de préférence
plus de 353° K (comptée en tant que température de la matière)

et/ou par emploi conjoint de forces de traction et en tenant également compte d'un degré d'étirage (rapport de l'épaisseur de la plaque entrante, c'est-à-dire l'épaisseur de la matière avant la compression, à l'épaisseur de la plaque sortante, c'est-à-dire l'épaisseur de la matière après la compression, avec ou sans étirage par traction complémentaire) de

plus de 1,1, de préférence
plus de 1,3.

6. Procédé selon l'une et/ou l'autre des revendications 1 à 5, caractérisé en ce que l'on maintient un degré d'étirage sous pression de

2,3 à 10, de préférence
2,5 à 8.

7. Procédé selon l'une et/ou l'autre des revendications 1 à 6, caractérisé en ce que le degré d'étirage sous pression est réglé de préférence en fonction de la hauteur de l'espacement, du rayon des cylindres et/ou de la largeur de la plaque, de la feuille, de la pièce moulée en forme de plaque ou du profilé, du nombre et de la ou des directions des étirages sous pression, de la température des cylindres, de la température de la matière et/ou de la vitesse des cylindres.

8. Procédé selon l'une et/ou l'autre des revendications 1 à 7, caractérisé en ce que la charge linéaire utilisée est de

950 N/mm à 5500 N/mm, de préférence
1200 N/mm à 5000 N/mm.

9. Procédé selon l'une et/ou l'autre des revendications 1 à 8, caractérisé en ce que, lors des étirages successifs, il se fait directement une transmission de chaleur sur la plaque, la feuille, la pièce moulée en forme de plaque ou le profilé par au moins un cylindre compresseur et/ou un cylindre d'appui, de préférence par l'emploi d'orifices et/ou de conduits agencés dans l'espace intérieur ou à proximité de leur surface pour un liquide de de transmission de chaleur et/ou par équilibrage thermique par rayonnement et/ou par chauffage par contact.

10. Procédé selon l'une et/ou l'autre des revendications 1 à 9, caractérisé en ce qu'il se fait en amont et/ou en aval de l'étirage sous pression un conditionnement thermique de la plaque, de la feuille, de la pièce moulée en forme de plaque ou du profilé, de préférence par l'emploi d'un dispositif permettant d'éviter un dégagement de chaleur dans le milieu ambiant.

11. Procédé selon l'une et/ou l'autre des revendications 1 à 10, caractérisé en ce que la plaque, la feuille, la pièce moulée en forme de plaque ou le profilé est soumis(e) à un pivotement d'un certain angle, de préférence de 90°, de préférence dans la période de relâchement, après le premier ou les multiples étirages, dans le plan de l'intervalle d'espacement vis-à-vis de la direction de déplacement et est soumis(e) à nouveau à au moins un étirage, après réglage d'une hauteur d'espacement égale, de préférence, inférieure à celle de la compression précédente.

12. Procédé selon l'une et/ou l'autre des revendications 1 à 11, caractérisé en ce que la plaque, la feuille, la pièce moulée en forme de plaque ou le profilé est soumis(e) à un pivotement de 10 à 80° dans le plan de l'intervalle d'espacement vis-à-vis de la direction de déplacement, de préférence, dans la période de relâchement, après le premier ou les multiples étirages, est acheminé(e) tout d'abord à travers une paire de cylindres compresseurs en réglant une hauteur d'espacement égale ou de préférence inférieure à celle de l'étirage précédent, est ensuite soumis(e) à un nouveau pivotement de manière symétrique par rapport à la direction de déplacement pour être soumise encore une fois à un étirage.

13. Procédé selon l'une et/ou l'autre des revendications 1 à 12, caractérisé en ce que la plaque, la feuille, la pièce moulée en forme de plaque ou le profilé est acheminé(e), de préférence dans la période de relâchement, après le premier ou les multiples étirages, en sens inverse en réglant une hauteur d'espacement égale, de préférence inférieure à celle de la compression précédente, entre deux cylindres compresseurs, de préférence à travers la même paire de cylindres compresseurs avec un entraînement réversible.

14. Procédé selon l'une et/ou l'autre des revendications 1 à 13, caractérisé en ce que la plaque, la feuille, la pièce moulée en forme de plaque ou le profilé est pressé(e) et étiré(e) par au moins une première paire de cylindres compresseurs agencés selon un angle de 1 à 89°, de préférence 45°, vis-à-vis de la direction de déplacement des éléments et ensuite, par au moins une autre paire de cylindres compresseurs agencés selon un angle de 91 à 179°, de préférence 135°, vis-à-vis de la direction de déplacement.

15. Procédé selon l'une et/ou l'autre des revendication 1 à 14, caractérisé en ce que, après, pendant ou avant le passage de la surface sollicitée à la pression, la plaque, la feuille, la pièce moulée en forme de plaque ou le profilé est soumis(e) par une paire de cylindres, de préférence par la dernière paire de cylindres compresseurs, à une force de traction dans la direction de déplacement.

16. Dispositif de production de plaques, feuilles, pièces moulées en forme de plaques ou profilés en matières synthétiques, de préférence de matières thermoplastiques, d'une plus haute résistance mécanique du fait d'une orientation moléculaire due à un étirage dans l'intervalle d'espacement d'au moins une paire de cylindres presseurs ou compresseurs, le dispositif étant caractérisé en qu'il est constitué d'une ou de plusieurs paires de cylindres presseurs, dont, respectivement, le premier est supporté, respectivement monté à rotation, de préférence dans des corps de paliers (ou bancs latéraux de paliers) fixes, tandis que l'autre est supporté dans des corps de paliers réglables en hauteur, en profondeur et/ou latéralement, de systèmes de réglage de l'équilibre thermique, de préférence un système de chauffage de la surface des cylindres et de systèmes, de préférence des systèmes mécaniques et/ou hydrauliques, en liaison avec les corps de paliers des cylindres réglables pour recevoir une charge linéaire dans l'intervalle d'espacement des cylindres de 950 N/mm à 5500 N/mm.

17. Dispositif selon la revendication 16, caractérisé en ce qu'au moins une paire de cylindres compresseurs et/ou cette même paire en combinaison avec au moins deux cylindres d'appui possède(nt) une résistance élevée au fléchissement ou une résistance élevée à la flexion sous des pressions de

50 à 250 MPa, de préférence
90 à 150 MPA.

18. Dispositif selon la revendication 16, caractérisé en ce qu'il comporte au moins une paire de cylindres compresseurs et/ou cette même paire en combinaison avec au moins deux cylindres d'appui pour assurer une résistance élevée au fléchissement ou une résistance à la flexion élevée sous des pressions de

20 à 49,9 MPa, de préférence
25 à 49,9 MPa.

19. Dispositif selon l'un et/ou l'autre des revendications 16 à 18, caractérisé par des orifices ou des conduits agencés dans l'espace intérieur ou à proximité de la surface d'au moins un cylindre compresseur et/ou d'un cylindre d'appui pour un liquide de transmission de chaleur, et/ou un agencement d'au moins un radiateur thermique et/ou un ruban de chauffage par contact, de préférence sur ou au voisinage d'un ou plusieurs cylindres presseurs ou compresseurs et/ou des tuyères permettant d'acheminer directement un milieu de transmission de chaleur, de préférence un liquide de transmission de chaleur, aux cylindres presseurs ou compresseurs, aux cylindres d'appui et/ou aux plaques, feuilles, pièces moulées en forme de plaques ou profilés.

20. Dispositif selon l'une et/ou l'autre des revendications 16 à 19, caractérisé par un ou plusieurs systèmes agencés séparément ou combinés installés avant, entre et/ou après les paires de cylindres pour le transport, le retraitement et/ou le changement de direction.

21. Dispositif selon l'une et/ou l'autre des revendications 16 à 20, caractérisé en qu'il est prévu au moins une paire de cylindres presseurs ou compresseurs en combinaison avec au moins un système d'étirage ou de traction.

22. Dispositif selon l'une et/ou l'autre des revendications 16 à 21, caractérisé par un dispositif de rotation ou de pivotement intercalé à la suite d'au moins une paire de cylindres presseurs ou compresseurs, pour réaliser un changement de direction des plaques, feuilles, pièces moulées en forme de plaques ou profilés étirés et qui font l'objet d'un autre traitement.

23. Dispositif selon l'une et/ou l'autre des revendications 16 à 22, caractérisé par au moins un entraînement réversible de la ou des paires de cylindres.

24. Dispositif selon l'une et/ou l'autre des revendications 16 à 23, caractérisé par l'agencement et la conformation des corps de paliers de la paire de cylindres presseurs ou compresseurs sur un bâti ou un cadre en sorte que chaque banc latéral de paliers résiste à une force de

plus de $3,5 \times 10^4$ N, de préférence
plus de $0,5 \times 10^5$ N.

25. Dispositif selon l'une et/ou l'autre des revendications 16 à 23, caractérisé par l'agencement et la conformation des corps de paliers de la paire de cylindres presseurs ou compresseurs sur un bâti ou un cadre en sorte que chaque banc latéral de paliers résiste à une force de

plus de 1 x 10⁵ N, de préférence plus de 2 X 10⁵ N.

26. Dispositif selon l'une et/ou l'autre des revendications 16 à 25, caractérisé en ce qu'au moins une paire de cylindres compresseurs est agencée selon un angle de 1 à 89°, de préférence 45°, vis-à-vis de la direction de déplacement de la plaque, de la feuille, de la pièce moulée en forme de plaque ou du profilé et au moins une autre paire de cylindres compresseurs est agencée selon un angle de 91 à 179°, de préférence 135°, vis-à-vis de la direction de déplacement.

27. Dispositif selon l'une et/ou l'autre des revendications 18 à 26, caractérisé en ce qu'au lieu d'au moins une paire de cylindres compresseurs, on agence 2 n + 1 cylindres compresseurs (n = 1 à 6, de préférence 1 et 2) les uns au-dessus des autres ou au-dessous des autres et/ou encore à côté des autres latéralement, le premier et le 2 n + 1 ième cylindres, de préférence le premier et le troisième et/ou le cinquième étant entraînés dans le même sens de rotation.

28. Dispositif selon l'une et/ou l'autre des revendications 16 à 27, caractérisé en ce que le premier et le troisième cylindres compresseurs sont respectivement supportés par des corps de paliers réglables en hauteur, en profondeur et/ou latéralement.

29. Dispositif selon l'une et/ou l'autre des revendications 16 à 28, caractérisé par des cylindres d'appui dont le diamètre ou la résistance au fléchissement sont plus importants que ceux des cylindres d'étirage qui leur sont associés.

Figur 1

Fig. 2

5

1

4

5

2

Fig. 3

6

1

2

6

Fig. 4

7

7

Fig.5